# EUROPEAN PATENT SPECIFICATION

(11) **EP 1 957 808 B1**
(45) Date of publication and mention of the grant of the patent: **17.04.2019**
(21) Application number: 06824555.4
(22) Date of filing: 17.11.2006
(51) Int. Cl.: F16B 43/00, F16F 15/02, F16B 5/02

(54) **METHOD AND ARRANGEMENT FOR VIBRATION ABSORPTION**
VERFAHREN UND ANORDNUNG ZUR SCHWINGUNGSDÄMPFUNG
PROCEDE ET DISPOSITION POUR L'ABSORPTION DES VIBRATIONS

(30) Priority: 29.11.2005 SE 0502599
(43) Date of publication of application: 20.08.2008
(73) Proprietor: Scania CV AB (publ), 151 87 Södertälje (SE)
(72) Inventor: WENTZEL, Henrik, S-11333 Stockholm (SE)
(74) Representative: Scania CV AB
(86) International application number: PCT/SE2006/050486
(87) International publication number: WO 2007/064290

(56) References cited:
- EP-A2- 1 515 005
- JP-A- H09 158 359
- US-A- 4 908 245
- US-A- 6 145 182
- PATENT ABSTRACTS OF JAPAN & JP 05 099 258 A (SIEGEL:KK) 20 April 1993

## Description

### 1. Background

### 1.1 Technical field

The present invention relates to a method according to the introductory part of the attached claim 1.

The invention also relates to a device according to the introductory part of the attached claim 8.

### 1.2 State of the art

In, for example, a threaded connection, the topology of the contact pressure results in energy loss caused by microsliding in the connection. The energy loss caused by microsliding in threaded connections is the most important vibration-damping mechanism for certain components.

Document JP H09158359 A discloses a post member functioning as a damping member by fastening slidably mutual joint surfaces of steel members of built-up posts jointed in surface contact with a plurality of steel members with an external force.

Document EP1515005 A2 discloses a joint assembly with a deformable member provided for limiting an extension of the joint in the direction of a load path derived from an impact.

The object of the present invention is to provide a connection which affords high energy losses for the purpose of vibration damping.

### 2. Summary of the invention

The object as above is achieved with a method and a device according to the attached independent claims 1 and 8 respectively.

Further advantages are achieved by what is specified in the respective dependent claims.

### 3. Brief description of the drawings

The invention is described below in more detail with respect to embodiment examples and the attached drawings, in which:
- Fig. 1 depicts schematically a first embodiment of a device according to the invention,
- Fig. 2 depicts schematically a second embodiment of a device according to the invention,
- Fig. 3 depicts schematically a third embodiment of a device according to the invention,
- Fig. 4 depicts schematically a fourth embodiment of a device according to the invention,
- Fig. 5 depicts schematically a typical pressure distribution at the contact surface round a screwhole in the respective cases of planar surfaces and surfaces of a contact surface configuration according to the invention.

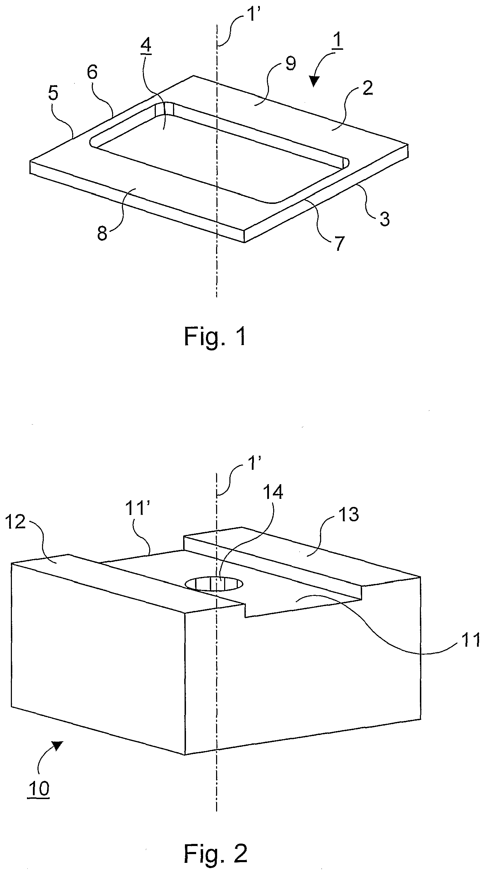

In Fig. 1, ref. 1 denotes an insert intended and arranged to be applied in a threaded connection joining together at least two components (not depicted) which are connected by the threaded connection and each have their respective contact surface facing that of the other. The insert applied between the contact surfaces of the components is thus adapted to encompassing the contact surfaces of the connection which are subject to contact pressure, whereby the configuration of the contact surfaces matches the configuration of the two main surfaces 2, 3 of the insert. It should be noted that the insert is not depicted to scale as regards thickness but should be thinner relative to its extent in other respects. A suitable thickness is usually < 0.5 mm.

According to the embodiment depicted in Fig. 1, the connecting element of the connection, represented by a chain-dotted centreline 1' in Fig. 1, is adapted to running through an aperture 4 in the insert, the main contact surface configuration of the insert being formed by the aperture in the insert and the outer contour 5 of the insert. According to the embodiment depicted, the insert is provided with a substantially quadrilateral, e.g. rectangular, outer contour and a substantially quadrilateral, e.g. rectangular, aperture extending in principle between two mutually opposite sides 6, 7 of the insert in order to form two substantially rectangular mutually opposite contact surface portions 8, 9 of the insert.

The object of the embodiment depicted in Fig. 2 is to provide a contact surface configuration situated directly at the surface of a component 10 which is intended to be subject to contact pressure. The originally continuous surface (not depicted) is here provided with a recess 11 whereby a contact surface configuration comprising two mutually opposite contact surface portions 12, 13 separated by a void 11' constituted by the recess is formed, with a hole 14 for the connecting element of the connection, a screwhole, situated in the groove, where the connecting element is represented by a chain-dotted centreline 1'.

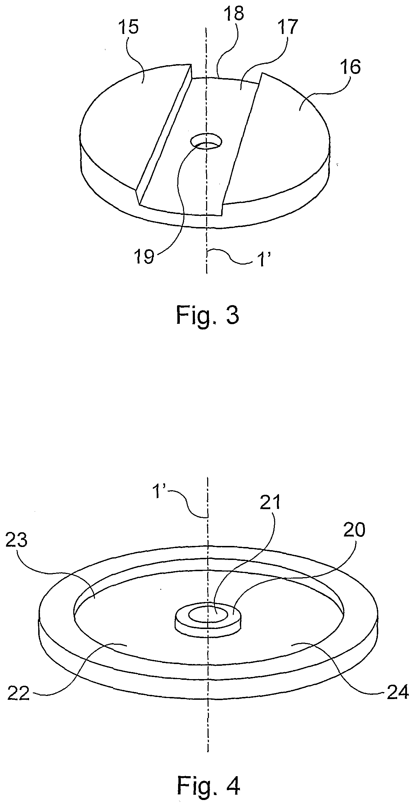

According to the embodiment depicted in Fig. 3, the contact surface configuration comprises two mutually opposite contact surface portions 15, 16 which form part of an originally circular surface (not depicted) in which a diametral groove 17 is arranged, resulting in a void 18 between the mutually opposite contact surface portions, with a hole 19 for the connecting element of the connection, a screwhole, situated in the groove, preferably at the centrepoint of the originally circular surface, where the connecting element is represented by a chain-dotted centreline 1'.

According to the embodiment depicted in Fig. 4, the contact surface configuration comprises a central circular portion 20 in which a hole 21 for the connecting element of the connection, represented by a chain-dotted centreline 1', is situated centrally, and a portion 22 running peripherally in a circular path, resulting in a void 23 running circumferentially in the form of a recess 24 situated between the central and peripheral portions.

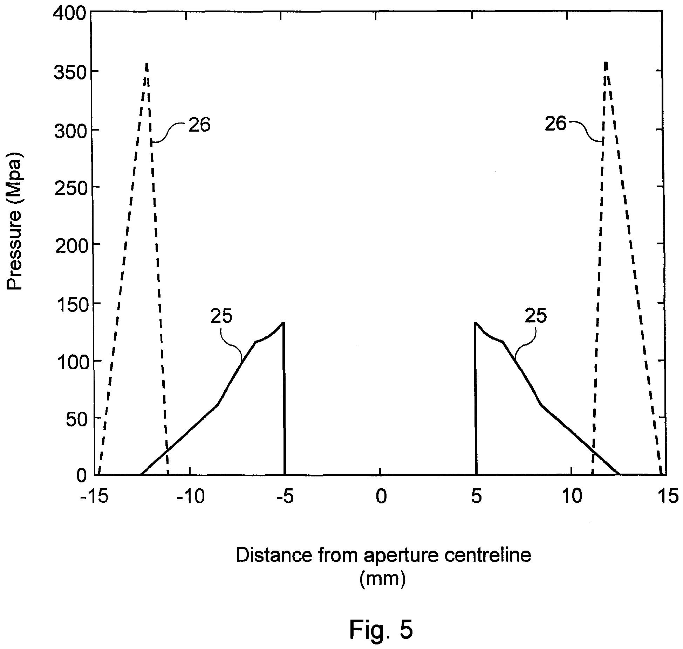

In the pressure distribution diagram depicted in Fig. 5 by way of example in relation to a 10 mm diameter screwhole, the continuous curves 25 represent the pressure distribution of the state of the art, i.e. two mutually opposite planar working surfaces in the threaded connection, and the broken curves 26 represent a pressure distribution with a contact surface configuration according to the invention, i.e. with, for example, an insert which keeps the contact surface away from the screwhole. The result is increased energy losses in the connection, since a shear force acting at the contact surface of the connection will act across a larger proportion of the surface which is subject to contact pressure.

The method and the function of the device according to the invention are probably substantially indicated by the foregoing description.

With the object of increasing the energy losses caused by microsliding at the surfaces of a threaded connection which are subject to contact pressure, the topology of the contact pressure is modified by adapting the configuration of the contact surfaces. Increasing the energy loss improves the vibration damping in the connection.

The extent of the microsliding depends inter alia on the shear loads acting at the surfaces which are subject to contact pressure and it is desirable that the respective contact surface configuration should provide a certain orientation with respect to the direction of the shear loads concerned.

With regard to the configurations according to Figs. 1-3, it is therefore in many cases desirable for there to be orientation such that shear loads act perpendicular to the hole/groove in the surface configuration which is subject to contact pressure. The embodiment according to Fig. 4 is primarily intended for rotary loads and is therefore axially symmetrical.

The invention is described above in relation to various embodiment examples and embodiments. Further embodiments and minor additions and modifications are of course conceivable without departing from the basic concept of the invention. Thus the embodiments according to Figs. 3 and 4 may take the form of inserts as depicted in the drawing. Corresponding contact surface configurations may also be arranged directly on a component in order to constitute the surface of the component which is subject to contact pressure.

Said recess may be created by, for example, milling or plastic machining.

According to preferred embodiments the insert is preferably made of suitable steel.

## Claims

1. A method for vibration damping in a threaded connection joining together at least two components which are connected by the threaded connection and each have their respective contact surface facing that of the other, **characterised by** the step of modifying the topology of the contact pressure by adapting the configuration of the contact surfaces in order to increase the energy loss caused by microsliding at the surfaces of the connection which are subject to contact pressure.

2. A method according to claim 1, **characterised by** the step of altering the contact surface configuration and the contact pressure topology by means of at least one recess (11, 17, 24) in the contact surface of a component (10) which is subject to contact pressure.

3. A method according to claim 1 or 2, **characterised by** the step of adapting the configuration of the contact surfaces by applying between the contact surfaces an insert (1) which is subject to contact pressure.

4. A method according to claim 3, **characterised by** the step of applying the connecting element of the connection (1'), e.g. a screw or bolt, through an aperture (4) in the insert.

5. A method according to claim 4, **characterised by** the step of shaping the insert's aperture (4) and outer contour (5) to the contact surface configuration of the insert.

6. A method according to any one of claims 1-5, **characterised by** the step of orienting the surfaces which are subject to contact pressure (8, 9, 12, 13, 15, 16) with the direction of their main extent transverse to the direction of the shear load to which the contact surfaces are subject.

7. A method according to claim 6, **characterised by** the step of arranging an insert (1) comprising a substantially rectangular aperture (4) in such a way that the longest sides of the aperture run perpendicular to the direction of the shear force to which the contact surfaces (8, 9) are subject.

8. A device for vibration damping in a threaded connection joining together at least two components which are connected by the threaded connection and each have their respective contact surface facing that of the other, **characterised in that** the surfaces of the connection which are subject to contact pressure (8, 9, 12, 13, 15, 16, 20, 22) are adapted to increasing the energy loss caused by microsliding, whereby the configuration of the contact surfaces is adapted to modifying the topology of the contact pressure.

9. A device according to claim 8, **characterised by** at least one recess (11) in a contact surface of a component (10) which is subject to contact pressure, which recess (11) alters the configuration of the contact surface and hence the contact pressure topology.

10. A device according to claim 8, **characterised by** an insert (1) arranged between the contact surfaces in order to adapt the configuration of the contact surfaces, which insert is adapted to being subject to contact pressure.

11. A device according to claim 10, **characterised in that** connecting element of the connection (1'), e.g. a screw or bolt, is applied to run through an aperture (4) in the insert.

12. A device according to claim 10 or 11, **characterised in that** the main contact surface configuration of the insert is formed by the insert's aperture (4) and outer contour (5).

13. A device according to claim 10, 11 or 12, **characterised by** an insert (1) with a substantially rectangular outer contour (5) and a substantially rectangular aperture (4) which extends in principle between two mutually opposite sides (6, 7) of the insert in order to form two substantially rectangular mutually opposite contact surface portions (8, 9).

14. A device according to claim 8, **characterised by** a contact surface configuration comprising mutually opposite contact surface portions (15, 16) separated by a void (18) constituted by a recess (17) in which a screwhole (19) is situated.

15. A device according to claim 14, **characterised in that** the mutually opposite contact portions (15, 16) form parts of a circular surface or parts of a quadrilateral surface.

16. A device according to claim 8 or 9, **characterised by** a contact surface configuration comprising a central circular portion (20) in which a screwhole (21) is situated, and a peripheral circular portion (22), whereby a void (23) running circumferentially is formed by a recess (24) running circumferentially between the central and peripheral portions.

17. A device according to claim 14, 15 or 16, **characterised in that** said contact surface configuration is encompassed by an insert.

## Patentansprüche

1. Verfahren zum Dämpfen von Vibrationen in einer Schraubverbindung, welche zumindest zwei Komponenten verbindet, die durch die Schraubverbindung verbunden sind, und die ihre jeweilige Kontaktoberfläche derjenigen der anderen Komponente zugewandt haben, **gekennzeichnet durch** den Schritt eines Modifizierens der Topologie des Kontaktdrucks durch Anpassen der Konfiguration der Kontaktoberflächen, um den Energieverlust zu erhöhen, der durch Mikrorutschen an den Oberflächen der Verbindung verursacht wird, die dem Kontaktdruck ausgesetzt sind.

2. Verfahren gemäß Anspruch 1, **gekennzeichnet durch** den Schritt eines Änderns der Kontaktoberflächen-Anordnung und der Kontaktdruck-Topologie mittels zumindest einer Vertiefung (11, 17, 24) in der Kontaktoberfläche einer Komponente (10), welche dem Kontaktdruck ausgesetzt ist.

3. Verfahren gemäß Anspruch 1 oder 2, **gekennzeichnet durch** den Schritt eines Anpassens der Konfiguration der Kontaktoberflächen durch ein Anwenden eines Einsatzes (1) zwischen den Kontaktoberflächen, welcher dem Kontaktdruck ausgesetzt ist.

4. Verfahren gemäß Anspruch 3, **gekennzeichnet durch** den Schritt eines Anwendens des verbindenden Elements der Verbindung (1'), zum Beispiel einer Schraube oder eines Bolzens, durch eine Öffnung (4) in dem Einsatz hindurch.

5. Verfahren gemäß Anspruch 4, **gekennzeichnet durch** den Schritt eines Formens der Öffnung (4) und der äußeren Kontur (5) des Einsatzes an die Kontaktoberflächen-Konfiguration des Einsatzes.

6. Verfahren gemäß einem der Ansprüche 1 bis 5, **gekennzeichnet durch** den Schritt eines Ausrichtens der Oberflächen (8, 9, 12, 13, 15, 16), welche dem Kontaktdruck ausgesetzt sind, an der Richtung ihrer Haupterstreckung quer zu der Richtung der Scherbelastung, welcher die Kontaktoberflächen ausgesetzt sind.

7. Verfahren gemäß Anspruch 6, **gekennzeichnet durch** den Schritt eines Anordnens eines Einsatzes (1), der eine im Wesentlichen rechteckige Öffnung (4) umfasst, in einer solchen Weise, dass die längsten Seiten der Öffnung sich senkrecht zu der Richtung der Scherkräfte erstrecken, welchen die Kontaktoberflächen (8, 9) ausgesetzt sind.

8. Vorrichtung zum Dämpfen von Vibrationen in einer Schraubverbindung, welche zumindest zwei Komponenten verbindet, die durch die Schraubverbindung verbunden sind, und die ihre jeweilige Kontaktoberfläche derjenigen der anderen Komponente zugewandt haben, **dadurch gekennzeichnet, dass** die Oberflächen (8, 9, 12, 13, 15, 16) der Verbindung, welche dem Kontaktdruck ausgesetzt sind, dazu eingerichtet sind, den Energieverlust zu erhöhen, der durch Mikrorutschen verursacht ist, wobei die Konfiguration der Kontaktoberflächen dazu eingerichtet ist, die Topologie des Kontaktdrucks anzupassen.

9. Vorrichtung gemäß Anspruch 8, **gekennzeichnet durch** zumindest eine Vertiefung (11) in einer Kontaktoberfläche einer Komponente (10), welche dem Kontaktdruck ausgesetzt ist, wobei die Vertiefung (11) die Konfiguration der Kontaktoberfläche und daher die Kontaktdruck-Topologie verändert.

10. Vorrichtung gemäß Anspruch 8, **gekennzeichnet durch** einen Einsatz (1), der zwischen den Kontaktoberflächen angeordnet ist, um die Konfiguration der Kontaktoberflächen anzupassen, wobei der Einsatz dazu eingerichtet ist, dem Kontaktdruck ausgesetzt zu sein.

11. Vorrichtung gemäß Anspruch 10, **dadurch gekennzeichnet, dass** das verbindende Element der Verbindung (1'), zum Beispiel eine Schraube oder ein Bolzen, angewendet wird, um durch eine Öffnung (4) in dem Einsatz hindurch zu verlaufen.

12. Vorrichtung gemäß Anspruch 10 oder 11, **dadurch gekennzeichnet, dass** die Hauptkontaktoberflächen-Konfiguration des Einsatzes von der Öffnung (4) und der äußeren Kontur (5) des Einsatzes gebildet ist.

13. Vorrichtung gemäß Anspruch 10, 11 oder 12, **gekennzeichnet durch** einen Einsatz (1) mit einer im Wesentlichen rechteckigen äußeren Kontur (5) und einer im Wesentlichen rechteckigen Öffnung (4), die sich im Prinzip zwischen zwei gegenseitig gegenüberliegenden Seiten (6, 7) des Einsatzes erstreckt, um zwei im Wesentlichen rechteckige, gegenseitig gegenüberliegenden Kontaktoberflächen-Abschnitte (8, 9) auszubilden.

14. Vorrichtung gemäß Anspruch 8, **gekennzeichnet durch** eine Kontaktoberflächen-Konfiguration, welche gegenseitig gegenüberliegende Kontaktoberflächen-Abschnitte (15, 16) umfasst, die von einem Hohlraum (18) getrennt sind, der von einer Vertiefung (17) gebildet ist, in welcher ein Schraubloch (19) angeordnet ist.

15. Vorrichtung gemäß Anspruch 14, **dadurch gekennzeichnet, dass** die gegenseitig gegenüberliegenden Kontakt-Abschnitte (15, 16) Teile einer kreisförmigen Oberfläche oder Teile einer vielseitigen Oberfläche ausbilden.

16. Vorrichtung gemäß Anspruch 8 oder 9, **gekennzeichnet durch** eine Kontaktoberflächen-Konfiguration, die einen zentralen kreisförmigen Abschnitt (20), in dem ein Schraubloch (21) angeordnet ist, und einen außenliegenden kreisförmigen Abschnitt (22) umfasst, wobei ein Hohlraum (23), der umfänglich verläuft, von einer Vertiefung (24) gebildet ist, die umfänglich zwischen dem zentralen und dem außenliegenden Abschnitt verläuft.

17. Vorrichtung gemäß Anspruch 14, 15 oder 16, **dadurch gekennzeichnet, dass** die Kontaktoberflächen-Konfiguration von einem Einsatz umfasst ist.

## Revendications

1. Procédé d'amortissement de vibrations dans un raccord fileté reliant ensemble au moins deux composants qui sont raccordés par le raccord fileté et chacun ayant sa surface de contact respective en face de celle de l'autre, **caractérisé par** l'étape consistant à modifier la topologie de la pression de contact en adaptant la configuration des surfaces de contact afin d'augmenter la perte d'énergie causée par un micro-coulissement au niveau des surfaces du raccord qui sont soumises à une pression de contact.

2. Procédé selon la revendication 1, **caractérisé par** l'étape consistant à modifier la configuration de surface de contact et la topologie de pression de contact par au moins une cavité (11, 17, 24) dans la surface de contact d'un composant (10) qui est soumis à une pression de contact.

3. Procédé selon la revendication 1 ou 2, **caractérisé par** l'étape consistant à adapter la configuration des surfaces de contact en appliquant entre les surfaces de contact un insert (1) qui est soumis à une pression de contact.

4. Procédé selon la revendication 3, **caractérisé par** l'étape consistant à appliquer l'élément de raccordement du raccord (1'), par exemple une vis ou un boulon, à travers une ouverture (4) dans l'insert.

5. Procédé selon la revendication 4, **caractérisé par** l'étape consistant à façonner l'ouverture (4) et le contour externe (5) de l'insert sur la configuration de surface de contact de l'insert.

6. Procédé selon l'une quelconque des revendications 1 à 5, **caractérisé par** l'étape consistant à orienter les surfaces qui sont soumises à une pression de contact (8, 9, 12, 13, 15, 16), la direction de leur principale extension étant transversale à la direction de la charge de cisaillement à laquelle sont soumises les surfaces de contact.

7. Procédé selon la revendication 6, **caractérisé par** l'étape consistant à disposer un insert (1) comprenant une ouverture sensiblement rectangulaire (4) de telle sorte que les côtés les plus longs de l'ouverture soient perpendiculaires à la direction de la force de cisaillement à laquelle sont soumises les surfaces de contact (8, 9).

8. Dispositif d'amortissement de vibrations dans un raccord fileté reliant ensemble au moins deux composants qui sont raccordés par le raccord fileté et chacun ayant sa surface de contact respective en face de celle de l'autre, **caractérisé en ce que** les surfaces du raccord soumises à une pression de contact (8, 9, 12, 13, 15, 16, 20, 22) sont conçues pour augmenter la perte d'énergie causée par le micro-coulissement, moyennant quoi la configuration des surfaces de contact est conçue pour modifier la topologie de la pression de contact.

9. Dispositif selon la revendication 8, **caractérisé par** au moins une cavité (11) dans une surface de contact d'un composant (10) qui est soumis à une pression de contact, ladite cavité (11) modifiant la configuration de la surface de contact et donc la topologie de pression de contact.

10. Dispositif selon la revendication 8, **caractérisé par** un insert (1) agencé entre les surfaces de contact afin d'adapter la configuration des surfaces de contact, ledit insert étant conçu pour être soumis à une pression de contact.

11. Dispositif selon la revendication 10, **caractérisé en ce que** l'élément de raccordement du raccord (1'), par exemple une vis ou un boulon, est appliqué pour passer à travers une ouverture (4) dans l'insert.

12. Dispositif selon la revendication 10 ou 11, **caractérisé en ce que** la configuration de la surface de contact principale de l'insert est formée par l'ouverture (4) et le contour externe (5) de l'insert.

13. Dispositif selon la revendication 10, 11 ou 12, **caractérisé par** un insert (1) ayant un contour externe sensiblement rectangulaire (5) et une ouverture sensiblement rectangulaire (4) qui s'étend en principe entre deux côtés mutuellement opposés (6, 7) de l'insert afin de former deux portions de surface de contact mutuellement opposées et sensiblement rectangulaires (8, 9).

14. Dispositif selon la revendication 8, **caractérisé par** une configuration de surface de contact comprenant des portions de surface de contact mutuellement opposées (15, 16) séparées par un vide (18) constitué d'une cavité (17) dans laquelle se trouve un trou de vis (19).

15. Dispositif selon la revendication 14, **caractérisé en ce que** les portions de contact mutuellement opposées (15, 16) forment des parties d'une surface circulaire ou des parties d'une surface quadrilatérale.

16. Dispositif selon la revendication 8 ou 9, **caractérisé par** une configuration de surface de contact comprenant une portion circulaire centrale (20) dans laquelle est situé un trou de vis (21), et une portion circulaire périphérique (22), moyennant quoi un vide (23) s'étendant circonférentiellement est formé par une cavité (24) s'étendant circonférentiellement entre les portions centrale et périphérique.

17. Dispositif selon la revendication 14, 15 ou 16, **caractérisé en ce que** ladite configuration de surface de contact est englobée dans un insert.
